Europäisches Patentamt

European Patent Office

Office européen des brevets

(11) Publication number: **0 420 647 A1**

# (12) EUROPEAN PATENT APPLICATION

(21) Application number: 90310602.9

(51) Int. Cl.⁵: **F02B 47/02, F02M 25/02**

(22) Date of filing: 27.09.90

(30) Priority: 29.09.89 GB 8922067

(43) Date of publication of application:
03.04.91 Bulletin 91/14

(84) Designated Contracting States:
BE DE ES FR GB GR IT NL SE

(71) Applicant: Lau, Che Bong
Flat C4, 11th Floor, Wing Tak Mansion, No.
275 Wanchai Road
Hong Kong(JP)

(72) Inventor: Lau, Che Bong
Flat C4, 11th Floor, Wing Tak Mansion, No.
275 Wanchai Road
Hong Kong(JP)

(74) Representative: Hitchcock, Esmond Antony et
al
Lloyd Wise, Tregear & Co. Norman House
105-109 Strand
London WC2R 0AE(GB)

(54) Improvements in combustion engines.

(57) A method of burning fuel in a vehicle comprises mixing water with air whereby the water is atomized within the air, whereafter fuel is brought into contact with the atomized water in air, such that fuel is laid down on at least the outer surface of the atomized water droplets, and finally the fuel on the atomized water in air is combusted in the combustion chamber. The method can be used either with a petrol or a diesel arrangement.

FIG.2

## IMPROVEMENTS IN COMBUSTION ENGINES

This invention relates to internal combustion engines and particularly to the control of the air-fuel mixture delivered thereto. As it is well known, control of the air-fuel mixture delivered to an internal combustion engine is beneficial not only in minimizing the amount of fuel burned, but also in reducing pollution of the atmosphere by the discharge of unburned or only partially burned fuel. The present invention has particular use in motor vehicles.

Many proposals have been made with the intention of reducing the consumption of fuel in internal combustion engines and predominantly, these are concerned with reducing or cutting off the supply of fuel under certain engine running conditions. In U.S. Patent No. 4754743 it was additionally proposed for the dilution of the fuel/air mixture delivered to the engine by the delivery of additional air thereto.

In accordance with one aspect of the invention, a method of burning fuel in a vehicle comprises bringing into contact water with air whereby the water is atomized within the air, thereafter bringing fuel into contact with the atomized water in air, such that fuel is laid down on at least the outer surface of the atomized water in air droplets, and finally combusting the fuel on the atomized water in air in a combustion chamber.

Such a system of combustion provides for efficient combustion, since the surface area of the fuel is increased since it becomes laid on the outside of the atomized water in air droplets, and in particular there is more efficient fuel burning and less fuel waste leading to less pollution, since it is easier to burn all the fuel because of its increased surface area.

The above method can be used either with a petrol or diesel arrangement, in other words in either a carburettor or fuel injection system. The method has the particular advantage that fuel saving is achieved since there is more efficient burning of fuel, and furthermore since there is much less fuel wasted, the method is much less polluting.

In accordance with another aspect of the invention, an apparatus for burning fuel in a vehicle comprises means to atomize water within a flow of air, means to bring into contact fuel with the atomized water in air, and means to combust the fuel contacting the atomized water in air within a combustion chamber.

Such an arrangement is extremely simple in design yet effective in that more efficient combustion is achieved.

Suitably, the means for atomizing the water in a flow of air comprises means to feed water into a venturi arrangement, through which the flow of air is passing.

The passage of water into the venturi, through which air passes and is speeded up, atomizes the water into tiny droplets within the flow of air. Suitably, the atomized water in air is passed into a flow of air after a throttle in a fuel injection system, whereafter the atomized water in air is passed to the entrance of the combustion chamber where it is brought into contact with the fuel. Preferably, the atomized water in air is passed into a flow of air and fuel after a throttle in a carburettor system, whereafter the fuel laid on the atomized water in air is passed into the combustion chamber. In both systems, such an arrangement will save fuel and present excess pollution.

The atomized water in air can be passed into the flow of air prior to the throttle position, for instance in the air flow meter/air filter arrangement, however, no fuel saving will be achieved in this arrangement, even though it would still prevent excess pollution.

In particular, the atomized water in air is passed into the flow of air after the throttle (ie governor) in a fuel injection system, and after the throttle in the carburettor in a carburettor system.

Suitably, the arrangement is such that very small droplets of water are formed, in other words an atomized cloud such that an almost weightless floating water in air cloud is achieved, whereby fuel can be passed after the throttle into this cloud for contact of the fuel with the outside surface of the water. Thereafter, the fuel on the atomized water in air is passed into the combustion chamber.

The shape of the venturi is designed for each particular vehicle, since the venturi controls the air/water ratio and causes appropriate atomization.

Suitably, valve means in the form of a solenoid is provided between the venturi and the inlet for the atomized water in air in order to control when (and the amount) the atomized water in air is brought into contact with the fuel.

Suitably, the solenoid is provided in order to feed the atomized water in air at the appropriate times, and in particular the solenoid operates in order to feed the atomized water in air at revolutions just above idling revolution (for example, approximately 50 r.p.m. over idling revolution and more preferably 100 r.p.m. over idling revolution), such that the atomized water in air is provided to the combustion chamber during acceleration, normal running speed and deceleration, but not whilst the engine is idling. As an example, the solenoid for the atomized water in air would operate say at between 500 and 1200 r.p.m. (and most preferably 800 r.p.m.) for a 2 litre car.

The arrangement comprises contacting the fuel with the atomized water in air which is preferably repeatedly atomized before entering the combustion chamber via the intake manifold of an engine. Within such a hydro-fuel mixture, water molecules are wrapped around by the suspending fuel particles since fuel is lighter in density than water, and thus will only wrap around the water molecules instead of forming a thorough mixture therewith. At boiling temperature, water molecules begin to evaporate generating a blast and/or explosion which smashes the surrounding fuel into even finer fragments. Consequently, a much enlarged contact surface area is created for the atomized fuel and intake air to give a more efficient and complete combustion.

Indeed, the combustion is so complete that the exhaust rate of carbon emissions (e.g hydrogen-carbon and carbon-monoxide compounds) is reduced to a minimum. A more complete combustion can effectively minimize the accumulation of carbon residue inside the combustion chamber and at the spark plugs. Moreover, engine oil on the cylinder wall is most likely to be sulphurated or diluted, thereby ensuring full lubrication and reducing wear and damage, and indeed prolonging engine durability.

In particular, the arrangement helps the carburettor to maintain a low fuel consumption rate at both low and high speed operations, hence giving rise to greater fuel economy.

The great improvement in engine combustion efficiency achieved by the arrangement offers a vehicle a remarkable strength in power and torque output for uphill operation. Furthermore, quieter engine operation is achieved through use of the arrangement, which by improving the ignition performance, has been able to maintain smooth engine combustion. Such is another effective means of protection against environmental pollution.

An embodiment of the invention will now be described by way of example and with reference to the accompanying drawings wherein:-

Figure 1 shows schematically in cross-section a twin choke carburettor generally of known design;

Figure 2 is an enlarged elevation of an idling jet embodying the invention;

Figure 3 shows schematically a fuel injection system incorporating an arrangement embodying the invention;

Figure 4 is an enlarged view of the water atomizing arrangement shown in Figures 2 and 3;

Figure 5 is an enlarged view of the atomized water in air solenoid shown in Figures 2 and 3;

Figure 6 is an enlarged view of an alternative water atomizing arrangement to that shown in Figure 4; and

Figure 7 is an enlarged view of an alternative atomized water in air solenoid control system to that shown in Figure 5.

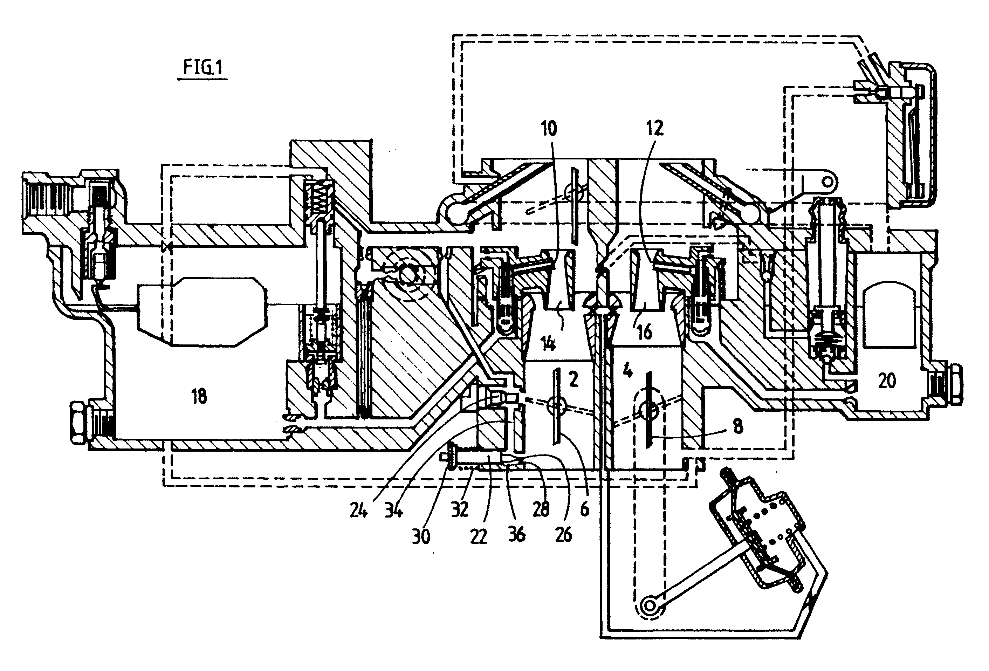

The carburettor shown in Figure 1 is of known twin choke design and has two inlet throats 2 and 4. The passage of the air-fuel mixture through the throat is controlled by butterfly valves 6 and 8 respectively. Valve 6 is adapted to be coupled directly to the throttle control of the engine on which the carburettor is mounted. Valve 8 is controlled in response to load demand on the engine as determined by the balance of negative pressure in the throats 2 and 4. The fuel is entrained by air in passage through either throat 2, 4 from main jets 10 and 12 leading to venturis 14 and 16. Fuel is fed to the jets 10 and 12 from float chambers 18 and 20.

The carburettor includes two additional jets; an idling jet 22 and a slow running jet 24. The idling jet is operative at all times, and permits the passage of sufficient fuel into the throat downstream of the valves 6 and 8 to maintain the engine running at idling speed, even when both valves 6 and 8 are closed. When the valve 6 is opened, the slow running jet becomes operative, and allows fuel to enter the throat 2 as the pressure in the throat 2 drops in response to increased engine speed. As the valve 6 is further opened, the primary main jet 10 becomes operative. When the engine demand is high, for example under hard acceleration, the valve 10 opens to deliver additional fuel/air mixture to the engine through throat 4.

The construction and operation of the carburettor shown in Figure 1 is itself known, and further details will not be described.

In the known carburettor construction, the idling jet 22 comprises a needle having a conical tip 26 extending into and possibly through an opening 28 in the wall of duct 2. The jet is threaded, and the axial position in relation to the duct wall is adjustable by screwing the jet into or out of the wall. A knurled end 30 is provided on the jet for this purpose, and/or the jet may be rotatable by means of a screwdriver or spanner. To ensure that the jet remains in place once adjusted, a spring 32 is compressed between the duct wall and the knurled end 30.

Fuel is fed to the idling jet 22 along a passage 34 formed in the duct wall. The outlet from passage 34 is at or adjacent the conical tip 26 where a chamber 36 surrounds the jet. Fuel is drawn from the chamber through the opening 28 by the negative pressure generated by the engine which causes a passage of air through the throat 2. Axial adjustment of the jet alters the size of the passageway through the opening 28 by varying the spacing between the wall of the opening and the conical surface of the tip 26.

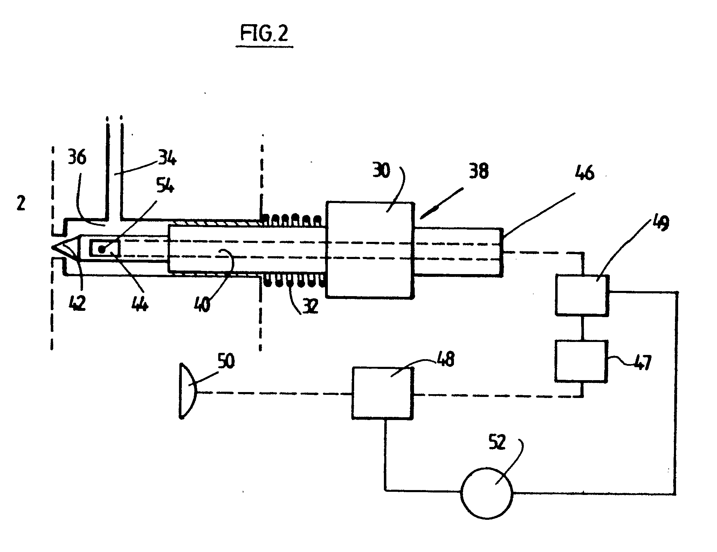

In accordance with the described embodiment of the invention, the idling jet 22 in Figure 1 is replaced by the jet 38 shown in Figure 2. The jet 38 is of substantially the same external shape as jet 22, but has an axial passageway 40 formed therein. The passageway 40 is adapted to deliver atomized water in air in place of fuel to the throat 2. Thus, adjacent its conical tip 42, the passageway 40 terminates in a discharge opening 44. It will be noted that when installed in a carburettor, this opening 44 will be within the chamber 36, and will preferably directly face the passage 34. Additionally an auxiliary discharge port 54 can be provided opposite the opening 44.

It will be appreciated that the manner in which discharge openings or ports are formed in the jet can take many forms, and be adapted for a particular carburettor. It is always desirable to arrange for at least some discharged atomized water in air to be directed towards the outlet from the passage 34 to have maximum direct influence on the flow of fuel therealong and, as discussed below on the flow of fuel to a slow running jet if included.

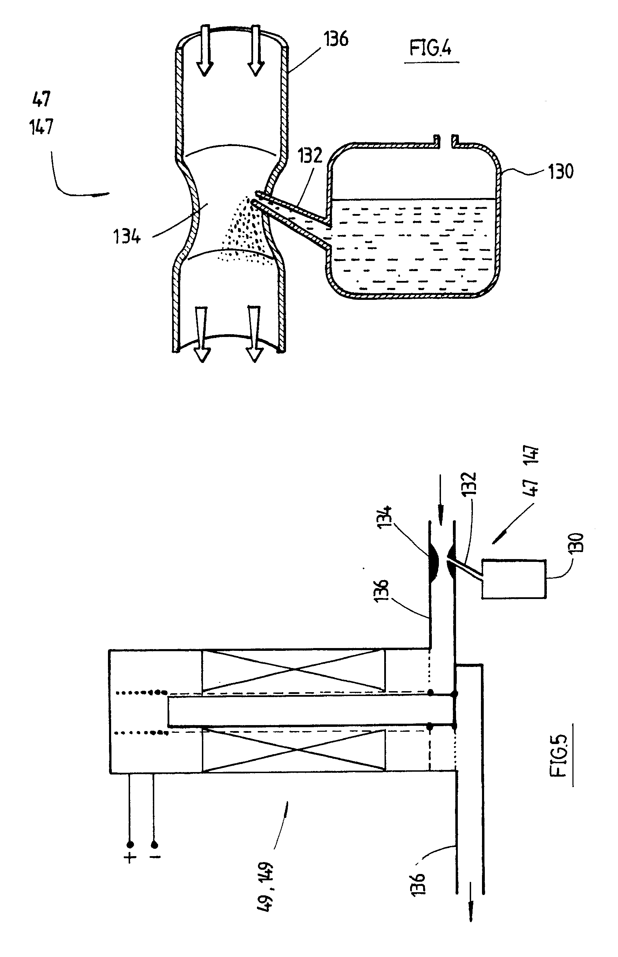

The other end 46 of the passageway 40 is coupled firstly to a valve 49 (suitably in the form of a solenoid), which is selectively openable to allow passage of the atomized water in air from the means 47 for producing the atomized water in air. Details of valve 49 and atomizing water in air means 47 will be described later, and in particular details of the valve 49 will be ascertained from Figure 5, while details of the atomized water in air means 47 will be ascertained from Figure 4. This atomizing water in air means 47 is itself coupled to a further valve 48 which is selectively openable to allow passage of atmospheric air from a filter 50 into the idling jet 38. The valves 49 and 48 are in turn operated by a switch mechanism 52 which is responsive to engine revolution. When the engine revolution increases beyond a specified value (i.e. greater than the r.p.m. of the engine when idling, and in the range of 500 to 1200 r.p.m.), the switch 52 opens the valves 49 and 48, allowing the atomized water in air to pass through passageway 40 and then, by virtue of the negative pressure in the carburettor throat, the atomized water in air is drawn into the throat in preference to fuel from passage 34. The passage of atomized water in air around the tip 42 of the jet 38 will form an air curtain which, at sufficient air flow, will block delivery of fuel from the passage 34. Under certain circumstances, air may also be forced up passage 34, and upstream of the slow running jet 24. In these circumstances, the air curtain is additionally formed around the slow running jet, and the fuel flow to the slow running jet also will also be prevented. When this condition is reached, the air-fuel mixture ratio in throat 2 will be determined by the flow of air past the main jet 10 and the additional air that is delivered through idling jet 38, and possibly also the slow running jet 24. At high engine revolutions, this will be a maximum ratio available, thus minimizing fuel consumption and air pollution by the discharge of unburned or partially burned fuel.

The valves 49 and 48 will normally be a solenoid operated valve linked to the switch 52. The switch can be easily coupled to the engine revolution by an electrical connection to for example, the tachometer, dynamo, or alternator of the engine. Such electrical connections are well-known and can be readily adapted for use in the invention. The valves 49 and 48, filter 50 and necessary electrical circuitry can be mounted without difficulty on an existing engine already fitted to a vehicle or other apparatus. Thus, in combination with the adapted jet 38 a system embodying the invention can be manufactured as an accessory for fitment to working apparatus.

The atomized water in air is passed into the passageway after the throttle valve 6, whereby fuel is saved and to prevent pollution. If the atomized water in air was passed through, for instance prior to the throttle valve 6, then there would be no fuel saving, although that would still be better pollution control.

When the atomized water in air is passed into the passageway after the throttle, fuel tends to lay on the outer surface of the very small water droplets forming the atomized water in air cloud, thereby substantially increasing the surface area of the fuel. When the fuel is burnt in the combustion chamber, the fuel is caused to burn more efficiently due to the increases surface area, which results firstly in fuel saving, and secondly limits pollution substantially.

In a carburettor adapted according to the invention, no loss of available power will be experienced as the operation of the modified idling jet 38 will also be dependent upon the pressure difference between the throat 2 and the atmosphere. If the engine demand is high and the pressure in the throat 2 increases, proportionally less air will be drawn through idling jet 38, and the air-fuel mixture will be enriched. Additionally of course, the air-fuel mixture delivered through throat 2 as a consequence of valve 8 being opened is unaffected by the delivery of auxiliary air through the idling jet 38.

By creating a leaner air/fuel mixture only at high engine revolutions, substantially unaltered engine performance can be achieved at lower revolutions. However, neither is performance diminished at higher engine revolutions, as the system described is to a large extent self-adjusting. Substantial fuel savings can be made, depending on the type of engine and the use to which it is put, and a wear on engine parts can also be reduced by the lowering of carbon deposition. Carbon emissions, particularly emissions of carbon monoxide, will also be reduced.

On most carburettor engines, the idling jet on the carburettor used is readily accessible for tuning purposes. The present invention can therefore readily be exploited in existing engines and carburettors by the replacement of the existing idling jet with the idling jet valve and switch mechanism described herein. A slow running jet is not normally so readily accessible, but it will be appreciated that a slow running jet adapted according to the invention may also be included in a carburettor as either an alternative or an addition to the idling jet described. It follows of course, that the system disclosed herein could readily be made part of a carburettor at the manufacturing stage.

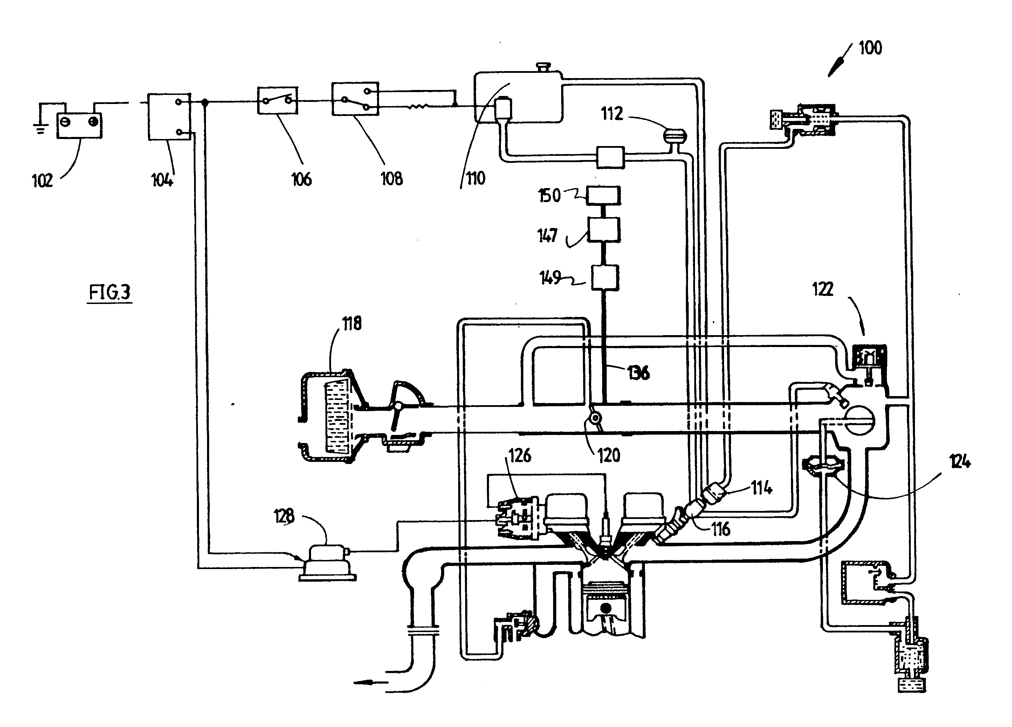

The air injector system shown in Figure 3 is basically a standard arrangement comprising a battery 102, an admission arrangement 104, a circuit opening relay 106, a fuel pump relay 108, a fuel tank pump 110, a fuel pulsation damper 112, a pressure regulator 114, and an injector 116. An air flow meter 118 is provided together with a throttle 120, a cold start injector 122, and an actuator 124. A distributor 126 is also provided and finally an igniter with coil 128 is provided.

The arrangement is modified at a position between the throttle and cold start injector, with an arrangement comprising means 147 to atomize water in an air flow, and a valve 149 to control the disposal of such atomized water in air within the passageway after the throttle.

The atomized water in air is passed into the passageway after the throttle 120, whereby fuel is saved and to prevent pollution. If the atomized water in air was passed through, for instance the air flow meter 118, then there would be no fuel saving, although that would still be better pollution control.

When the atomized water in air is passed into the passageway after the throttle, this mixture proceeds to the combustion chamber, where fuel is then inserted, which fuel tends to lay on the outer surface of the very small water droplets forming the atomized water in air cloud, thereby substantially increasing the surface area of the fuel in the combustion chamber. When the fuel is burnt, the fuel is caused to burn more efficiently due to the increases surface area, which results firstly in fuel saving, and secondly limits pollution substantially.

Figure 4 shows in greater detail the means 47 and 147 to atomize the water in the flow of air for the arrangements shown in Figures 2 and 3. In particular, a tank 130 of water is provided with an outlet nozzle 132, which nozzle is positioned in a venturi 134 provided in the passage 136 through which the air flow passes. The nozzle 132 provides small drops of water to the venturi 134 at various intervals (ie not a stream of water). This atomized water in air subsequently passes through the valve 149 (in the form of a solenoid), which controls the amount of atomized water in air provided through the outlet passage 136 into the passage after the throttle 120.

Figure 5 shows in greater detail the standard valve 49 and 149 that can be used to control the atomized water in air for the arrangements shown in Figures 2 and 3.

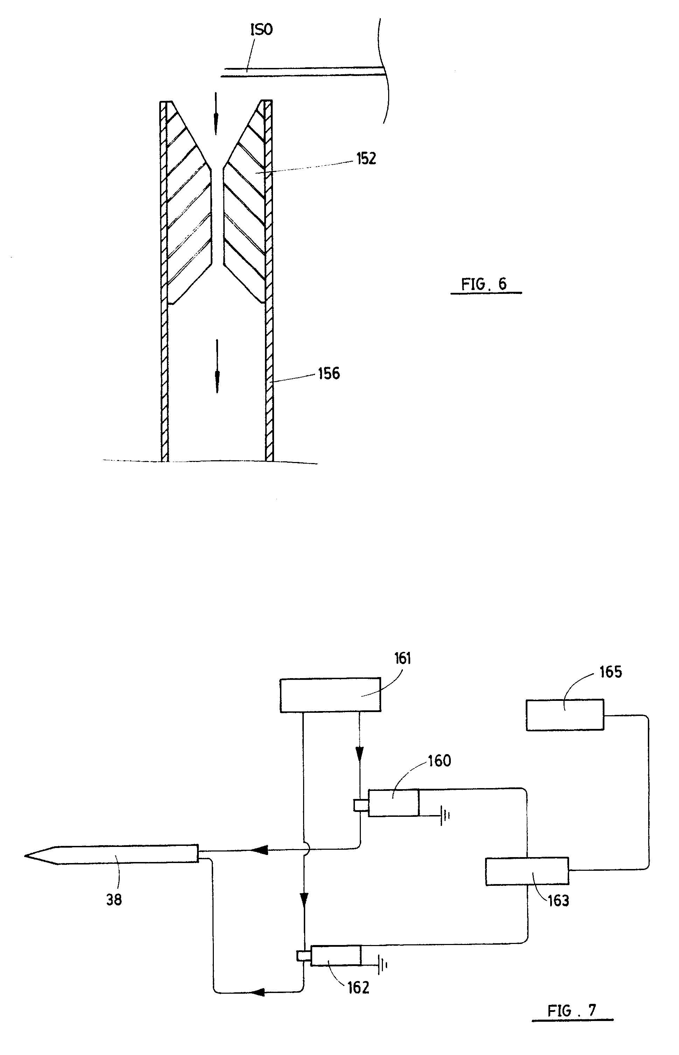

Figure 6 shows an alternative water atomizing arrangement to that shown in Figure 4. In Figure 6, the means for producing the atomized water in air comprises an outlet nozzle 150 from a tank of water (not shown) being transversely orientated relative the entrance of a venturi 152 (also known as a floating feeder). The nozzle 150 is transverse to the venturi 152 so that water is sucked out of the nozzle (rather than dripping out) by the effect of the venturi whereby better atomization of water is achieved.

The venturi 152 to be used has to be designed for a particular cylinder capacity, and in particular the length and diameter of the venturi 152 is different for different cylinder capacities.

In the following table, preferred the length and diameter of the venturi 152 is shown for different cylinder capacities: -

| CYLINDER CAPACITY | mm A | mm B | mm C | mm JET diameter |
|---|---|---|---|---|
| Under 1300 C.C. | 1.5 | 6 | 12 | 1.08 |
| 1300 - 2000 C.C. | 1.8 | 6 | 12 | 1.25 |
| 2000 - 2500 C.C. | 2.0 | 8 | 14 | 1.50 |
| 2500 - 3000 C.C. | 2.5 | 10 | 16 | 1.75 |
| 3000 - 4000 C.C. | 3.0 | 12 | 18 | 2.00 |
| 4000 - 5000 C.C. | 3.5 | 14 | 20 | 2.25 |
| 5000 - 6000 C.C. | 4.0 | 16 | 22 | 2.50 |
| 6000 - 7000 C.C. | 4.5 | 18 | 24 | 2.75 |

In the above table, A is the smallest inner diameter in millimetres (mm) of the venturi 152, B is the length in mm of the smallest diameter of the venturi 152, and C is the overall outer length of the venturi 152. The outer width of the venturi is approximately 5 mm. It has been found in experiments that to achieve the best atomization that the length of the smallest inner diameter of the venturi 152 is approximately four times the actual inner diameter of the venturi 152.

Both ends of the venturi 152 are also tapered to provide a smooth entrance and exit for the water in the venturi 152. The venturi 152 is removably secured to a support cylinder 156 whereby the venturi 152 can be removed, and another venturi inserted in the event that a user requires a change in power or a change in fuel consumption. Finally, the length B of the venturis is longer than known venturi in order to provide a stronger suction effect (which increases the flow of water therethrough).

Figure 7 meanwhile shows an alternative atomized water in air solenoid to that shown in Figure 5. In particular, a dual solenoid valve control system is provided having a first solenoid 160 which allows only a small amount of water from the source of water 161 to pass to the jet 38, and a second solenoid 162 which allows a greater amount of water from the source of water 161 to pass through to the jet 38.

In particular, the first and second solenoids 160 and 162 are operated by a thermostat whereby when a temperature below 85°C is reached, the solenoids act to prevent any water passing to the jet, in order to protect the engine when it is first started since water passing into a cold engine would cause potential damage (e.g. cracking of the piston). Furthermore, the second solenoid 162 is operated to cut out water to the jet 38 vehicle at speeds of below 10 miles an hour.

In consequence, at high r.p.m, since the temperature of the engine will be above 85°C, both solenoids 160 and 162 will operate, and in particular, a number of drops of water from the source of water 161 will pass to the jet at speeds over 10 miles per hour.

At idling speed, however, the second solenoid 162 will be cut out, and only the first solenoid 160 will be operating since the temperature will be above 85°C at idling (assuming of course the engine has already been running). During idling, a small amount of water (for instance a few drops of water) will pass through from the source of water 161 to the jet 38. In other words, solenoid 160 allows less water to pass to the jet 38 as does solenoid 162, and thus the system controls the amount of water passing to the jet depending on the temperature of the engine and/or the speed of the vehicle.

More specifically, a main power supply 165 (DC 12 volt) is connected to a control module 163 when the ignition is on (in other words, the engine is running), and the control module 163 is thermostatically controlled at an engine temperature of 85°C or higher to turn on the first and second solenoids 160 and 162 to allow a slight amount of atomized water in air (which can be adjusted easily) to pass to the jet 38 and thereafter be injected out of the opening 28 to dilute the rich mixture of fuel. Both solenoids 160 and 162 are switched off even if the engine temperature is 85°C or higher when the ignition is off, to prevent water passing into the engine when it is not running. If water passed into the engine whilst the ignition was off, it would be impossible to restart the engine since more water than fuel would be therein.

The second solenoid 162 meanwhile, is further operated at a predetermined speed of the vehicle, for instance 10 miles an hour or higher, when the ignition is on (subject to the engine temperature being 85°C or higher, otherwise the second solenoid is closed even if it exceeds the speed of 10 miles an hour). Additional atomized water in air is then injected into the throats 2 and 4 to dilute the rich mixture of fuel, and stop most of the fuel exiting from the slow running jet opening due to the formation of an air curtain from the opening 28 back upto the slow running jet opening.

## Claims

1. A method of burning fuel in a vehicle comprising bringing into contact water with air whereby the water is atomized within the air, thereafter bringing fuel into contact with the atomized water in air, such that fuel is laid down on at least the outer surface of the atomized water in air droplets, and finally combusting the fuel on the atomized water in air in a combustion chamber.

2. An apparatus for burning fuel in a vehicle comprising means to atomize water within a flow of air, means to bring into contact fuel with the atomized water in air, and means to combust the fuel contacting the atomized water in air within a combustion chamber.

3. An apparatus as claimed in Claim 2 wherein the means for atomizing the water in a flow of air comprises a venturi and means to feed water into the venturi, through which the flow of air is passing.

4. An apparatus as claimed in either Claim 2 or 3 wherein the means to bring into contact fuel with the atomized water in air is positioned after a throttle for an engine.

5. An apparatus as claimed in any one of Claims 2 to 4 wherein the means for atomizing the water in the flow of air achieves a floating water in air cloud.

6. An apparatus as claimed in any one of Claims 3 to 5 wherein the shape of the venturi is designed for each particular vehicle to provide the required air in water ratio and cause appropriate atomization.

7. An apparatus as claimed in any one of Claims 2 to 6 wherein valve means are provided for the atomizing means in order to control the amount of atomized water in air being brought into contact with the fuel.

8. An apparatus as claimed in Claim 7 wherein the valve means feeds the atomized water in air at the appropriate time(s).

9. An apparatus as claimed in Claim 8 wherein the valve means feeds the atomized water in air at all engine revolutions just above idling revolution.

10. An apparatus as claimed in Claim 9 wherein the valve means feeds the atomized water in air at all engine revolutions 50 r.p.m. over idling revolution.

11. An apparatus as claimed in either Claim 9 or 10 wherein the valve means feeds the atomized water in air at all engine revolutions over idling revolution and between 500 and 1200 r.p.m.

12. An apparatus as claimed in any one of Claims 7 to 11 wherein the valve means comprises a first valve to pass an amount of atomized water in air at one pre-determined condition and a second valve to pass a greater amount of atomized water in air at another pre-determined condition.

13. An apparatus as claimed in Claim 12 wherein the first valve passes an amount of atomized water in air when a pre-determined temperature of the engine is reached.

14. An apparatus as claimed in either Claim 12 or 13 wherein the second valve passes an amount of atomized water in air when a pre-determined engine revolution or vehicle speed is reached.

15. An apparatus as claimed in any one of Claims 7 to 14 wherein the valve means is inoperable whilst the engine is not running.

16. A method as claimed in Claim 1 wherein the water is atomized within the air by feeding water into a flow of air passing into a venturi.

17. A method as claimed in either claim 1 or 16 wherein the fuel is laid down on the atomized water in air after a throttle for an engine.

18. A method as claimed in any one of Claims 1, 16 and 17 wherein the amount of atomized water in air being brought into contact with the fuel is controlled.

FIG1

FIG.2

EP 0 420 647 A1

FIG.3

FIG.4

FIG.5

FIG. 6

FIG. 7

12

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 778 039 (DORE) <br> * Column 1, lines 53-67; column 4, lines 35-45; figure 1 * <br> — — — | 1-3,5,16, 18 | F 02 B 47/02 <br> F 02 M 25/02 |
| Y <br> D,Y | <br> US-A-4 754 743 (BONG et al.) <br> * Column 2, lines 1-10,29-34; figure 2 * <br> — — — | 7-10,15 <br> 7-10,15 | |
| A | GB-A-2 146 387 (VOLVO) <br> * Page 2, claims 1-4; figures 1,2 * <br> — — — | 1,2,4,7,8, 17,18 | |
| A | US-A-3 865 907 (ROCK) <br> * Column 1, line 30 - column 4, line 34; figure * <br> — — — — — | 1,2,4,17, 18 | |

| TECHNICAL FIELDS SEARCHED (Int. Cl.5) |
|---|
| F 02 B <br> F 02 M |

The present search report has been drawn up for all claims

| Place of search | Date of completion of search | Examiner |
|---|---|---|
| The Hague | 03 December 90 | KLINGER T.G. |